# EUROPÄISCHE PATENTSCHRIFT

(11) **EP 3 572 274 B1**
(45) Veröffentlichungstag und Bekanntmachung des Hinweises auf die Patenterteilung: **23.07.2025**
(21) Anmeldenummer: 19174167.7
(22) Anmeldetag: 13.05.2019
(51) Int. Cl.: B60N 2/39, B60N 2/54, B60N 2/50, B60N 2/02

(54) **FAHRZEUGSITZ MIT EINER FEDEREINRICHTUNG**
VEHICLE SEAT WITH SUPPORTING STRUCTURE
SIÈGE DE VÉHICULE DOTÉ D'UN DISPOSITIF À RESSORT

(30) Priorität: 18.05.2018 DE 102018112027
(43) Veröffentlichungstag der Anmeldung: 27.11.2019
(73) Patentinhaber: GRAMMER AG, 92289 Ursensollen (DE)
(72) Erfinder: Haller, Erwin, 92262 Birgland (DE); Irrgang, Andreas, 92421 Schwandorf (DE); Krivenkov Dr., Konstantin, 92224 Amberg (DE)
(74) Vertreter: Hannke Bittner & Partner mbB Regensburg

(56) Entgegenhaltungen:
- CN-U- 202 147 608
- DE-A1- 4 406 245
- DE-C- 499 488
- US-A1- 2007 272 818

## Beschreibung

Die Erfindung betrifft einen Fahrzeugsitz mit einer Federeinrichtung zum Federn von Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordneten Schwenkachse.

Derartige Fahrzeugsitze sind aus dem Stand der Technik bekannt, beispielsweise aus WO 2014/176130 A1. Hierbei ist ein Fahrzeugsitz erkennbar, welcher um eine Schwenkachse verschwenkbar ist und mittels Feder- bzw. Dämpfungseinrichtungen gegenüber der Karosserie gefedert bzw. gedämpft gelagert ist. Die Anordnung der Federung bzw. Dämpfung ist allerdings sehr platzintensiv. Weitere gattungsgemäße Fahrzeugsitze sind aus DE 499 488 C und CN 202 147 608 U bekannt.

Es ist demzufolge Aufgabe der vorliegenden Erfindung, die Nachteile des Standes der Technik zu überkommen und einen Fahrzeugsitz zu präsentieren, welcher eine platzsparende sowie konstruktiv und funktional verbesserte Federungseinrichtung gegenüber dem Stand der Technik aufweist.

Diese Aufgabe wird gemäß den Merkmalen des Patentanspruches 1 gelöst. Vorteilhafte Ausgestaltungen der Erfindung finden sich in den abhängigen Patentansprüchen. Kerngedanke der Erfindung ist es, einen Fahrzeugsitz mit einer Federeinrichtung zum Federn von Schwenkbewegungen eines Oberteils des Fahrzeugsitzes gegenüber einem Unterteil des Fahrzeugsitzes um eine in einer Fahrzeugsitzlängsrichtung oder Fahrzeugsitzbreitenrichtung verlaufend angeordnete Schwenkachse bereitzustellen, wobei die Federeinrichtung einen ersten in transversaler Richtung elastisch verformbaren Federstab und einen zweiten in transversaler Richtung elastisch verformbaren Federstab umfasst, wobei die transversale Richtung der radialen Richtung des jeweiligen Federstabs entspricht, wobei das Oberteil einen ersten unteren Anteil und einen zweiten unteren Anteil aufweist, wobei der erste untere Anteil mit dem ersten Federstab und der zweite untere Anteil mit dem zweiten Federstab mindestens in Wirkverbindung steht, um bei einer Verschwenkung des Oberteils den ersten Federstab oder den zweiten Federstab zu deformieren.

Alternative Formulierungen zu der transversalen Richtung können auch die Formulierungen "Richtung quer zu einer Längsachse des Federstabs" oder "radiale Richtung des Federstabs" verstanden werden.

Unter einem Federstab ist hierbei ein Stab zu verstehen, welcher federnde Eigenschaften aufweist und insbesondere in seiner transversalen Richtung elastisch verformbar ist. Durch eine Belastung des Stabes, hervorgerufen durch die elastische Verformung, wird der Federstab zeitlich begrenzt verformt, wodurch Rückführkräfte erzeugt werden, welche den Federstab bei einer Entlastung in seinen Ausgangszustand zurückversetzen.

Weiter bevorzugt sind der erste Federstab und der zweite Federstab und die Schwenkachse in einer Fahrzeugsitzhöhenrichtung gesehen zwischen dem Unterteil und dem Oberteil angeordnet, wodurch eine weitere Platzreduzierung vorgenommen werden kann.

Gemäß einer bevorzugten Ausführungsform ist die Schwenkachse vorzugsweise als eine Lagerachse ausgebildet und die Schwenkachse weist ein erstes Ende und ein zweites Ende auf, wobei das erste Ende und das zweite Ende der Schwenkachse mit dem Federungsunterteil nicht drehbar verbunden sind.

Ebenso ist es denkbar, dass die Schwenkachse als eine Lagerwelle ausgebildet ist, das heißt, dass sie insbesondere drehbar gelagert ist.

Weiter vorzugsweise sind ein erster Lagerbock und ein zweiter Lagerbock vorgesehen, welche jeweils mit dem Unterteil starr verbunden sind und der erste Lagerbock das erste Ende der Schwenkachse und der zweite Lagerbock das zweite Ende der Schwenkachse lagert.

Gemäß einer weiteren bevorzugten Ausführungsform weist der erste Federstab ein erstes Ende und ein zweites Ende auf und der zweite Federstab ein erstes Ende und ein zweites Ende auf, wobei das erste Ende des ersten Federstabs, das zweite Ende des ersten Federstabs, das erste Ende des zweiten Federstabs und das zweite Ende des zweiten Federstabs mit dem Federungsunterteil verbunden sind, insbesondere starr verbunden sind. Dadurch kann eine wesentlich höhere Steifigkeit erreicht werden. Ebenso wird durch eine starre Verbindung auch ausgeschlossen, dass bei einer Verformung der Federstäbe unerwünschte Drehbewegungen der Federstäbe auftreten und zu unerwünschten Effekten hinsichtlich der Federeigenschaften führen.

Weiter bevorzugt ist das erste Ende des ersten Federstabs und das erste Ende des zweiten Federstabs mit dem ersten Lagerbock und das zweite Ende des ersten Federstabs und das zweite Ende des zweiten Federstabs mit dem zweiten Lagerbock verbunden.

Gemäß einer besonders bevorzugten Ausführungsform kann noch ein dritter Federstab und gegebenenfalls ein vierter Federstab etc. vorgesehen sein.

Besonders bevorzugt sind der erste Federstab und der zweite Federstab in Fahrzeugsitzlängsrichtung oder Fahrzeugsitzbreitenrichtung verlaufend angeordnet.

Erfindungsgemäß sind der erste Federstab, der zweite Federstab und die Schwenkachse in einer gemeinsamen Ebene angeordnet, wobei die gemeinsame Ebene in einem normalen Betriebszustand des Fahrzeugsitzes parallel zu einer Grundebene gebildet aus der Fahrzeugsitzlängsrichtung und einer Fahrzeugsitzbreitenrichtung ist.

Unter einem normalen Betriebszustand ist hierbei zu verstehen, dass das Oberteil gegenüber dem Unterteil nicht verschwenkt ist. Ein ausgelenkter Betriebszustand bedeutet analog, dass das Oberteil gegenüber dem Unterteil verschwenkt ist.

Insbesondere heißt das, dass im ausgelenkten Betriebszustand, dass durch die Verschwenkung des Oberteils, je nach Richtung, eine Kraft auf den jeweiligen Federstab ausgeübt wird und diesen dabei deformiert, wodurch eine Federung des Oberteils aufgrund der elastischen Deformation des jeweiligen Federstabs hervorgerufen wird.

Gemäß einer weiteren bevorzugten Ausführungsform weist das Oberteil eine erste Ausbuchtung und eine zweite Ausbuchtung auf, wobei die erste Ausbuchtung mit dem ersten Federstab und die zweite Ausbuchtung mit dem zweiten Federstab in Wirkkontakt steht.

Dadurch, dass die Federstäbe jeweils mit einer entsprechenden Ausbuchtung des Oberteils in Wirkkontakt stehen, wird sichergestellt, dass unerwünschte Nebeneffekte bei einer Verschwenkung des Oberteils auftreten, beispielsweise ein Abrutschen des Federstabs und eine entsprechende Verringerung der Rückführkraft.

Weitere vorteilhafte Ausführungsformen ergeben sich aus den Unteransprüchen.

Weitere Ziele, Vorteile und Zweckmäßigkeiten der vorliegenden Erfindung sind der nachfolgenden von der Beschreibung in Verbindung mit der Zeichnung zu entnehmen. Hierbei zeigen:
- Fig. 1A: Fahrzeugsitz in einer schematischen Darstellung in einem normalen Betriebszustand;
- Fig. 1B: Fahrzeugsitz gemäß Figur 1A gemäß einer bevorzugten Ausführungsform;
- Fig. 1C: Fahrzeugsitz gemäß Figur 1A gemäß einer bevorzugten Ausführungsform;
- Fig. 2A: perspektivische Ansicht des Unterteils;
- Fig. 2B: perspektivische Ansicht des Oberteils;
- Fig. 3A: Oberteil gemäß Figur 2B gemäß einer bevorzugten Ausführungsform;
- Fig. 3B: Oberteil gemäß Figur 2B gemäß einer bevorzugten Ausführungsform.

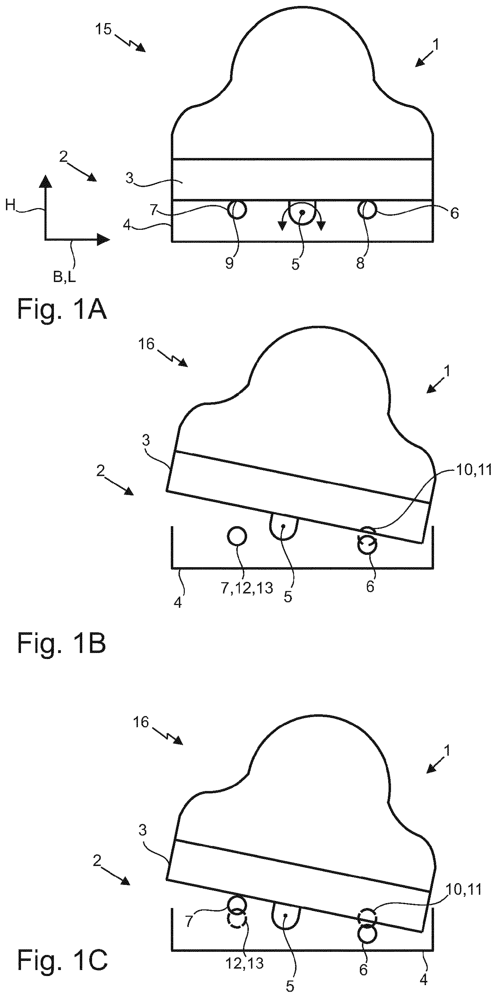

In der Figur 1A ist ein erfindungsgemäßer Fahrzeugsitz 1 gemäß einer bevorzugten Ausführungsform gezeigt, wobei sich der Fahrzeugsitz 1 in einem normalen Betriebszustand, das heißt, das Oberteil 3 ist gegenüber dem Unterteil 4 nicht verschwenkt. Die Figuren 1A-1C sind lediglich schematische Darstellungen.

Dabei ist das Oberteil 3 mittels einer Schwenkachse 5 gegenüber dem Unterteil 4 verschwenkbar. Das Oberteil 3 steht in dem normalen Betriebszustand 15 sowohl mit einem ersten Federstab 6 als auch einem zweiten Federstab 7 in Wirkkontakt, so dass bei einer Verschwenkung des Oberteils 3 gegenüber dem Unterteil 4 zumindest einer der Federstäbe 6, 7 deformiert wird, wodurch eine Federwirkung hervorgerufen wird.

Insbesondere weisen die Federstäbe 6, 7 jeweils ein erstes Ende 10, 12 sowie ein zweites Ende 11, 13 auf, wobei die ersten Enden 10, 12 und die zweiten Enden 11, 13 mit dem Unterteil 4 ortsfest verbunden sind. Das heißt, dass die ersten Enden 10, 12 und die zweiten Enden 11, 13 bei einer Verschwenkung des Oberteils ihre Position gegenüber dem Unterteil 4 nicht verändern. Die Federstäbe 6, 7 werden jedoch durch die Verschwenkung verformt. Insbesondere steht der erste Federstab 6 mittels eines ersten unteren Abschnittes 8 des Oberteils 3 und der zweite Federstab 7 mittels eines zweiten unteren Abschnittes 9 des Oberteils 3 mit dem Oberteil 3 in Wirkkontakt.

Die Figur 1B zeigt den Fahrzeugsitz 1 der Figur 1A gemäß einer bevorzugten Ausführungsform in dem ausgelenkten Betriebszustand 16, das heißt, dass das Oberteil 3 gegenüber dem Unterteil 4 verschwenkt ist, insbesondere im Uhrzeigersinn. Die gestrichelte Linie stellt das erste Ende 10 des ersten Federstabs 6 und ebenso das zweite Ende 11 des ersten Federstabs 6 dar, welche, wie bereits erwähnt, in ihrer Lage nicht verändert werden bei einer Verschwenkung des Oberteils 3. Der Rest des Federstabs 6 wird hingegen verformt, dargestellt durch die durchgezogene Linie. Weiter ist zu erkennen, dass der zweite Federstab 7 nicht mehr in Wirkkontakt mit dem Oberteil 3 steht, da in dem normalen Betriebszustand 15 zwischen dem Oberteil 3 und dem zweiten Federstab 7 lediglich ein Wirkkontakt herrschte. Eine Federwirkung wird gemäß dem Ausführungsbeispiel der Figur 1B durch den jeweilig deformierten Federstab, vorliegend den ersten Federstab 6 hervorgerufen.

Die Figur 1C zeigt eine weitere bevorzugte Ausführungsform des Fahrzeugsitzes der Figur 1A, wobei hier sowohl der erste Federstab 6 sowie der zweite Federstab 7 mit dem Oberteil 3 verbunden sind, das heißt, dass durch eine Verschwenkung des Oberteils 3 gegenüber dem Unterteil 4 sowohl der erste Federstab 6 als auch der zweite Federstab 7 verformt werden, dargestellt durch die durchgezogenen Linien. Die gestrichelten Linien zeigen wiederum die ersten Enden 10, 12 sowie die zweiten Enden 11, 13 an.

Bevorzugt könnten die Federstäbe 6, 7 mit dem Oberteil kraft- oder formschlüssig verbunden sein, insbesondere verschweißt oder verklebt. Beispielsweise könnten Beschläge (hier nicht gezeigt) des Oberteils 3 vorgesehen sein, welche die Federstäbe 6, 7 umfassen und die Federstäbe 6, 7 entsprechend mit dem Oberteil 3 verbinden.

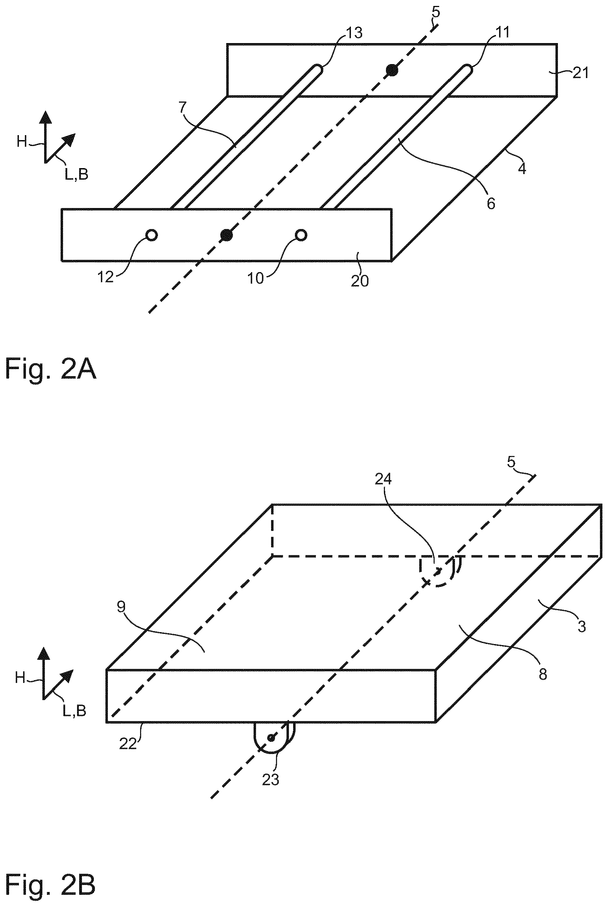

In der Figur 2A ist in einer schematischen Darstellung das Unterteil 4 dargestellt. Dabei weist das Unterteil 4 einen ersten Unterteilabschnitt 20 und einen zweiten Unterteilabschnitt 21 auf, welche jeweils senkrecht zu dem Unterteil 4 angeordnet sind. Zwischen dem ersten Unterteilabschnitt 20 und dem zweiten Unterteilabschnitt 21 sind der erste Federstab 6 und der zweite Federstab 7 angeordnet, wobei die Federstäbe 6, 7 entweder in Fahrzeugsitzlängsrichtung L oder in Fahrzeugsitzbreitenrichtung B verlaufend angeordnet sein können.

Weiter weist der erste Federstab 6 ein erstes Ende 10 und ein zweites Ende 11 auf, wobei das erste Ende 10 mit dem ersten Unterteilabschnitt 20 und das zweite Ende 11 mit dem zweiten Unterteilabschnitt 21 verbunden ist. Ebenso weist der zweite Federstab 7 ein erstes Ende 12 und ein zweites Ende 3 auf, wobei das erste Ende 12 mit dem ersten Unterteilabschnitt 21 und das zweite Ende 13 mit dem zweiten Unterteilabschnitt 21 verbunden ist. Ebenso ist schematisch die Schwenkachse 5, um welche das Oberteil 3 schwenkbar ist, dargestellt.

Entsprechend der Anordnung der Federstäbe 6, 7 in Fahrzeugsitzlängsrichtung L oder in Fahrzeugsitzbreitenrichtung B ist auch das Oberteil 3, dargestellt in der Figur 2B, angeordnet. Das Oberteil 3 weist unterseitig, das heißt auf einer Unterseite 22 in Fahrzeugsitzhöhenrichtung H gesehen einen ersten Drehabschnitt 23 und einen zweiten Drehabschnitt 24 sowie den ersten unteren Anteil 8 und den zweiten unteren Anteil 9 auf, welche hier lediglich schematisch angegeben sind, auf. Der erste Drehabschnitt 23 sowie der zweite Drehabschnitt 24 sind drehbar um die Schwenkachse 5 mit dem Unterteil 4 verbunden. Denkbar sind hierbei einzelne Bolzenelemente (hier nicht dargestellt) jeweils für den ersten Drehabschnitt 23 als auch den zweiten Drehabschnitt 24. Alternativ ist eine Lagerwelle (hier nicht gezeigt) denkbar, welche sowohl mit dem ersten Drehabschnitt 23 als auch dem zweiten Drehabschnitt 24 verbunden ist.

Insbesondere sind die Drehabschnitte 23, 24 zwischen dem ersten Unterteilabschnitt 20 und dem zweiten Unterteilabschnitt 21 angeordnet.

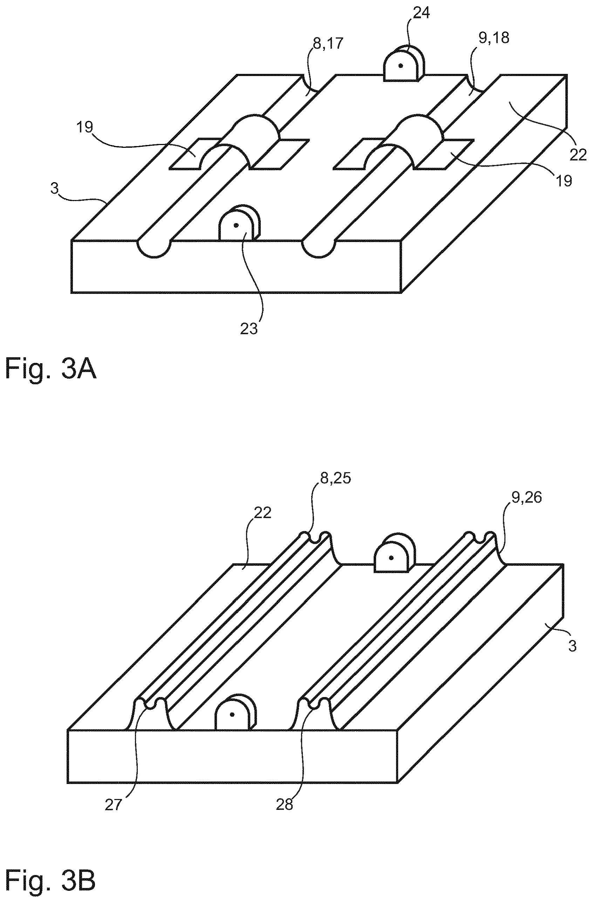

Die Figuren 3A und 3B zeigen verschiedene Ausgestaltungen der Unterseite 22 bzw. der unteren Anteile 8, 9.

Die Figur 3A zeigt das Oberteil 3 mit seiner Unterseite 22, wobei die Unterseite 22 eine erste Ausbuchtung 17 und eine zweite Ausbuchtung 18 aufweist, welche den ersten unteren Anteil 8 und den zweiten unteren Anteil 9 darstellen. Insbesondere sind die Ausbuchtungen 17, 18 derart ausgebildet, dass sie komplementär zu den Federstäben 6, 7 ausgebildet sind, um diese zumindest teilweise aufnehmen zu können.

Ebenso ist ein Beschlag 19 zu erkennen, welcher mit der Unterseite 22 verbunden ist. Ebenso ist der Beschlag 19 derart ausgebildet, um einen Federstab 6, 7 zumindest teilweise aufnehmen zu können. Ein Federstab 6, 7 wird daher entsprechend einerseits durch die Ausbuchtung 17, 18 und andererseits durch den Beschlag 19 umfasst.

Die Figur 3B zeigt eine alternative Ausführungsform, wobei die Unterseite 22 eine erste Erhöhung 25 und eine zweite Erhöhung 26 aufweist, wobei die erste Erhöhung 25 eine dritte Ausbuchtung 27 und die zweite Erhöhung 26 eine vierte Ausbuchtung 28 aufweist, welche jeweils mit einem Federstab 6, 7 in Wirkkontakt stehen oder verbunden sein kann.

Die Erhöhungen 25, 26 sind entsprechend wellenförmig oder Berg-Tal-förmig ausgebildet. Ebenso ist es denkbar, dass Beschläge 19 vorgesehen sind.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Fahrzeugsitz
- 2: Federeinrichtung
- 3: Oberteil
- 4: Unterteil
- 5: Schwenkachse
- 6: erster Federstab
- 7: zweiter Federstab
- 8: erster unterer Anteil
- 9: zweiter unterer Anteil
- 10: erstes Ende des ersten Federstabs
- 11: zweites Ende des ersten Federstabs
- 12: erstes Ende des zweiten Federstabs
- 13: zweites Ende des zweiten Federstabs
- 14: gemeinsame Ebene
- 15: normaler Betriebszustand
- 16: ausgelenkter Betriebszustand
- 17: erste Ausbuchtung
- 18: zweite Ausbuchtung
- 19: Beschlag
- 20: erster Unterteilabschnitt
- 21: zweiter Unterteilabschnitt
- 22: Unterseite
- 23: erster Drehabschnitt
- 24: zweiter Drehabschnitt
- 25: erste Erhöhung
- 26: zweite Erhöhung
- 27: dritte Ausbuchtung
- 28: vierte Ausbuchtung
- L: Fahrzeugsitzlängsrichtung
- B: Fahrzeugsitzbreitenrichtung
- H: Fahrzeugsitzhöhenrichtung

## Patentansprüche

1. Fahrzeugsitz (1) mit einer Federeinrichtung (2) zum Federn von Schwenkbewegungen eines Oberteils (3) des Fahrzeugsitzes (1) gegenüber einem Unterteil (4) des Fahrzeugsitzes (1) um eine in einer Fahrzeugsitzlängsrichtung (L) oder Fahrzeugsitzbreitenrichtung (B) verlaufend angeordnete Schwenkachse (5),
**dadurch gekennzeichnet, dass**
die Federeinrichtung (2) einen ersten in transversaler Richtung elastisch verformbaren Federstab (6) und einen zweiten in transversaler Richtung elastisch verformbaren Federstab (7) umfasst, wobei die transversale Richtung der radialen Richtung des jeweiligen Federstabs entspricht, wobei das Oberteil (3) einen ersten unteren Anteil (8) und einen zweiten unteren Anteil (9) aufweist, wobei der erste untere Anteil (8) mit dem ersten Federstab (6) und der zweite untere Anteil (9) mit dem zweiten Federstab (7) mindestens in Wirkverbindung steht, um bei einer Verschwenkung des Oberteils (3) den ersten Federstab (6) oder den zweiten Federstab (7) zu deformieren, wobei der erste Federstab (6), der zweite Federstab (7) und die Schwenkachse (5) in einer gemeinsamen Ebene (14) angeordnet sind, wobei die Ebene (14) in einem normalen Betriebszustand (15) des Fahrzeugsitzes (1) parallel zu einer Grundebene gebildet aus der Fahrzeugsitzlängsrichtung (L) und einer Fahrzeugsitzbreitenrichtung (B) ist.

2. Fahrzeugsitz (1) nach Anspruch 1,
**dadurch gekennzeichnet, dass**
der erste Federstab (6) ein erstes Ende (10) und ein zweites (11) Ende und der zweite Federstab (7) ein erstes Ende (12) und ein zweites (13) Ende aufweisen, wobei der erste Federstab (6) und der zweite Federstab (7) mittels dem jeweiligen ersten Ende (10, 12) und dem jeweiligen zweiten Ende (11, 13) mit dem Unterteil (4) verbunden sind.

3. Fahrzeugsitz (1) nach Anspruch 1 oder 2,
**dadurch gekennzeichnet, dass**
der erste Federstab (6) und der zweite Federstab (7) in Fahrzeugsitzlängsrichtung (L) oder Fahrzeugsitzbreitenrichtung (B) verlaufend angeordnet sind.

4. Fahrzeugsitz (1) nach einem der Ansprüche 1-3,
**dadurch gekennzeichnet, dass**
das Oberteil (3) eine erste Ausbuchtung (17) und eine zweite Ausbuchtung (18) aufweist, wobei die erste Ausbuchtung (17) mit dem ersten Federstab (6) und die zweite Ausbuchtung (18) mit dem zweiten Federstab (7) in Wirkkontakt stehen.

## Claims

1. Vehicle seat (1) with a spring device (2) for cushioning tilting movements of an upper part (3) of the vehicle seat (1) relative to a lower part (4) of the vehicle seat (1) about a tilt axis (5) arranged in a vehicle seat longitudinal direction (L) or vehicle seat width direction (B),
**characterised in that**,
the spring device (2) comprises a first spring rod (6) which is elastically deformable in the transverse direction and a second spring rod (7) which is elastically deformable in the transverse direction, wherein the transverse direction corresponds to the radial direction of the respective spring rod, wherein the upper part (3) has a first lower portion (8) and a second lower portion (9), wherein the first lower portion (8) is at least operatively connected to the first spring rod (6) and the second lower portion (9) is at least operatively connected to the second spring rod (7), in order to deform the first spring rod (6) or the second spring rod (7) when the upper part (3) is tilted, wherein the first spring rod (6), the second spring rod (7) and the tilt axis (5) are arranged in a common plane (14), wherein the plane (14) in a normal operating state (15) of the vehicle seat (1) is parallel to a basic plane formed from the longitudinal direction (L) of the vehicle seat and a vehicle seat width direction (B).

2. Vehicle seat (1) according to claim 1,
**characterised in that**
the first spring rod (6) has a first end (10) and a second (11) end and the second spring rod (7) has a first end (12) and a second (13) end, wherein the first spring rod (6) and the second spring rod (7) are connected to the lower part (4) by means of the respective first end (10, 12) and the respective second end (11, 13).

3. Vehicle seat (1) according to claim 1 or 2,
**characterised in that**
the first spring rod (6) and the second spring rod (7) are arranged to run in the longitudinal direction (L) or width direction (B) of the vehicle seat.

4. Vehicle seat (1) according to any one of claims 1-3,
**characterised in that**
the upper part (3) has a first bulge (17) and a second bulge (18), wherein the first bulge (17) is in operative contact with the first spring rod (6) and the second bulge (18) is in operative contact with the second spring rod (7).

## Revendications

1. Siège de véhicule (1) avec un dispositif à ressort (2) pour absorber les mouvements de pivotement d'une partie supérieure (3) du siège de véhicule (1) par rapport à une partie inférieure (4) du siège de véhicule (1) autour d'un axe de pivotement (5) disposé en s'étendant dans une direction de la longueur (L) du siège de véhicule ou dans une direction de la largeur (B) du siège de véhicule,
**caractérisé par le fait que**
le dispositif à ressort (2) comporte une première tige à ressort (6) élastiquement déformable dans la direction transversale et une seconde tige à ressort (7) élastiquement déformable dans la direction transversale, la direction transversale correspondant à la direction radiale de la tige à ressort respective, la partie supérieure (3) présentant une première partie inférieure (8) et une seconde partie inférieure (9), la première partie inférieure (8) étant au moins en liaison active avec la première tige à ressort (6) et la seconde partie inférieure (9) étant au moins en liaison active avec la seconde tige à ressort (7), pour déformer la première tige à ressort (6) ou la seconde tige à ressort (7) lors d'un pivotement de la partie supérieure (3), la première tige à ressort (6), la seconde tige à ressort (7) et l'axe de pivotement (5) étant disposés dans un plan commun (14), le plan (14) étant, dans un état de fonctionnement normal (15) du siège de véhicule (1), parallèle à un plan de base formé par la direction de la longueur (L) du siège de véhicule et une direction de la largeur (B) du siège de véhicule.

2. Siège de véhicule (1) selon la revendication 1,
**caractérisé par le fait que**
la première tige à ressort (6) présente une première extrémité (10) et une seconde extrémité (11) et la seconde tige à ressort (7) présente une première extrémité (12) et une seconde extrémité (13), la première tige à ressort (6) et la seconde tige à ressort (7) étant reliées à la partie inférieure (4) au moyen de la première extrémité respective (10, 12) et de la seconde extrémité respective (11, 13).

3. Siège de véhicule (1) selon l'une des revendications 1 et 2,
**caractérisé par le fait que**
la première tige à ressort (6) et la seconde tige à ressort (7) sont disposées de manière à s'étendre dans le sens de la longueur (L) du siège de véhicule ou dans le sens de la largeur (B) du siège de véhicule.

4. Siège de véhicule (1) selon l'une des revendications 1 à 3,
**caractérisé par le fait que**
la partie supérieure (3) présente un premier renfoncement (17) et un second renfoncement (18), le premier renfoncement (17) étant en contact actif avec la première tige à ressort (6) et le second renfoncement (18) étant en contact actif avec la seconde tige à ressort (7).
